# EUROPÄISCHE PATENTANMELDUNG

(11) **EP 1 612 199 A1**
(43) Veröffentlichungstag der Anmeldung: **04.01.2006**
(21) Anmeldenummer: 04022311.7
(22) Anmeldetag: 20.09.2004
(51) Int. Cl.: C05F 3/00

(54) **Verfahren zur Lagerung und Entsorgung von Gülle**

(30) Priorität: 19.09.2003 DE 10343966; 28.10.2003 DE 10350390
(71) Anmelder: Greenfield Holding GmbH, 1030 Wien (AT)
(72) Erfinder: Jüssen Armin, 51252 Simmerath (DE); Jüssen Marc, 52064 Aachen (DE)
(74) Vertreter: Wolff, Felix

(57) **Zusammenfassung**

Die vorliegende Erfindung betrifft ein Verfahren zur Lagerung und/oder Entsorgen von Gülle, bei dem der flüssig Anteil der Gülle mit einem Superabsorber vermischt wird. Des weiteren betrifft die vorliegende Erfindung ein Gemisch bestehen aus dem flüssigen Anteil von Gülle und einem Superabsorber.

## Beschreibung

Die vorliegende Erfindung betrifft ein Verfahren zur Lagerung und/oder Entsorgen von Gülle bei dem die Gülle mit einem Superabsorber vermischt wird. Des weiteren betrifft die vorliegende Erfindung ein Gemisch bestehen aus Gülle und einem Superabsorber.

Die Entsorgung und Lagerung von Gülle, die beispielsweise bei der Schweine-, Rinder- und/oder Hühnerhaltung anfällt wird ein immer größeres Problem, weil die Gülle unbehandelt nicht in das öffentliche Kanalsystem eingeleitet und im Winter oder bei starken Niederschlägen die Gülle nicht auf Felder ausgebracht werden kann.

Aufgabe der vorliegenden Erfindung ist es deshalb ein Verfahren zur Lagerung und/oder Entsorgen von Gülle zur Verfügung zu stellen, das die Nachteile des Standes der Technik nicht aufweist.

Gelöst wird die Aufgabe mit einem Verfahren gemäß Patentanspruch 1. Bevorzugte Ausführungsformen des Verfahrens sind in den Ansprüchen 2-7 beansprucht.

Erfindungsgemäß wird die Gülle mit einem Superabsorber gemischt. Gülle im Sinne der Erfindung ist jede tierische Gülle, beispielsweise von Schweine- Rinder- und/oder Hühnergülle.

Vorzugsweise wird nur der flüssige Anteil der Gülle mit einem Superabsorber gemischt. Der flüssige Anteil der Gülle ist beispielsweise durch ein mechanisches Trennverfahren erhältlich, indem die Gülle in einen Anteil, der im wesentlichen Feststoff enthält und einen flüssigen Anteil aufgetrennt wird. Der flüssige Anteil wird mit dem Superabsorber vermischt.

Die Gülle insgesamt, deren flüssiger- und/oder fester Anteil können vor der Mischung mit dem Superabsorber vorbehandelt werden. Eine Vorbehandlung im Sinne der Erfindung ist jede dem Fachmann bekannte chemisch/physikalische Behandlung wie beispielsweise Flotation, insbesondere Elektroflotation, Oxidation, Nassoxidation, Adsorption, Extraktion, Eindampfung, Kristallisation etc.

Ein Superabsorber im Sinne der Erfindung ist ein Polymer, das ein vielfaches seines eigenen Gewichtes an einer wässrigen Flüssigkeit aufnehmen und auch unter Druck zumindest teilweise halten kann. Vorzugsweise handelt es sich bei dem Superabsorber um ein Polymer, besonders bevorzugt um ein Polyacrylat, das besonders bevorzugt pulverförmig vorliegt. Besonders bevorzugt ist der Superabsorber nicht oder nur geringfügig neutralisiert. Der Superabsorber wird zum Beispiel in die flüssige Gülle gerührt und quillt dann, so dass die Gülle vollständig von dem Superabsorber aufgenommen wird. Das resultierende Material ist zumindest gelartig. Vorzugsweise weist es jedoch noch eine körnige Struktur auf.

Es war für den Fachmann überaus erstaunlich und nicht zu erwarten, dass es durch das erfindungsgemäße Verfahren gelingt den flüssigen Anteil von Gülle nahezu unbegrenzt zu lagern oder wie weiter unten noch detaillierter beschrieben das resultierende Produkt einer Verwertung zuzuführen. Das erfindungsgemäße Verfahren ist einfach und kostengünstig durchzuführen. Das resultierende Material kann sehr gut transportiert werden.

Vorzugsweise beträgt das Verhältnis Gülle oder dem flüssigen Anteil von Gülle zu Superabsorber 15 - 130 : 1, vorzugsweise 30 - 80 : 1, besonders bevorzugt 40 - 60 : 1, jeweils bezogen auf die Masse.

Vorzugsweise wird der mit der Gülle beladene Superabsorber gelagert und zwar besonders bevorzugt so, dass ein Teil der von dem Superabsorber aufgenommenen Gülle verdunstet. Die Verdunstung kann beispielweise in Hallen, die vorzugsweise künstlich und/oder natürlich beheizt und vorzugsweise belüftet sind, erfolgen. Da die Oberfläche der beladenen superabsorbierenden Partikel relativ groß ist, erfolgt die Verdunstung vergleichsweise schnell und kann zu einer Gewichtsabnahme von bis zu 3 Gew.-% pro Tag führen. Besonders bevorzugt beträgt die Gewichtsreduktion bei der Verdunstung 30 - 80, vorzugsweise 40 -75, besonders bevorzugt 60 - 70 Gew.-%. Insbesondere wenn der Superabsorber nicht oder nur teilweise neutralisiert ist, wird zumindest ein Teil des Stickstoffs in der Gülle an den Superabsorber gebunden und verdunstet somit nicht. Die Abluft aus der Verdunstung wird gegebenenfalls einer Abgaswäsche, vorzugsweise einer Ammoniakwäsche unterzogen.

In einer bevorzugten Ausführungsform der vorliegenden Erfindung wird der mit Gülle beladene Superabsorber, besonders bevorzugt nachdem ein Teil der Gülle verdunstet ist mit Hafenschlick versetzt.

Unter Hafenschlick im Sinne der Erfindung soll verallgemeinernd, in Hafenbecken abgelagerte Sedimente, Sedimente entlang von oder nahe an Seewegen, Sedimente an Flußmündungen oder dergleichen, verstanden werden. Der Hafenschlick kann behandelt sein. Eine Behandlung im Sinne der Erfindung ist eine Entwässerung aber auch eine zumindest teilweise Entfernung von unerwünschten Substanzen wie beispielsweise Organozinnverbindungen. Diese Entfernung dieser Substanzen erfolgt vorzugsweise durch ein Verfahren wie es in der DE 102 50 533.0 beschrieben ist. Diese Patentanmeldung wird hiermit als Referenz eingeführt und gilt somit als Teil der Offenbarung. Bei diesem Verfahren wird mittels in einer Reaktionszelle erzeugtem radikalischen Stickstoff, beispielsweise Tributylzinn, aufgespalten und in umwelttechnisch gesehen unproblematische organische Verbindung überführt. Diese Verfahren ist auch auf weitere zinnorganische Verbindungen sowie andere als umweltbedenklich einzustufende Substanzen anwendbar. Weiterhin werden Schwermetalle und CSB-relevante Stoffe, zumindest teilweise, oxidiert. Die oxidierten Substanzen flocken, zumindest teilweise, aus und werden anhand der in dem Reaktionszeiten erzeugten Sauerstoffbläschen an die Oberfläche getragen und können dort von dem übrigen Wasserstrom separiert werden. Der Hafenschlick wird so auf kostengünstige und einfache Weise in einen umwelttechnisch unproblematisches Produkt verwandelt und es entsteht ein fester Kleiboden. Dies ist ein neuer Rohstoff, der nicht den üblichen Abfallbestimmungen unterliegt. Die Flocken werden in eine Filterpresse oder eine Schlammpresse gepumpt und weiter entwässert und können dann ebenfalls als neuer Rohstoff weiter verwendet werden. Dementsprechend ist der Hafenschlick vorzugsweise entgiftet.

Des weiteren kann das oben beschriebene Gemisch aus mit Gülle beladenem Superabsorber und Hafenschlick noch mit dem aus der Separation stammendem Güllefeststoffanteil vermischt werden. Vorzugsweise beträgt das Mischungsverhältnis zwischen Hafenschlick/Superabsorber und Gülle 0,3:1 - 3:1, besonders bevorzugt 0,7:1 - 1,5:1, ganz besonders bevorzugt 0,8:1 - 1,2:1 bezogen auf die Masse und der Anteil an beladenem Superabsorber 0,3 - 2 kg, vorzugsweise 0,5 - 1,5 kg, besonders bevorzugt 0,75 - 1,25 kg pro Tonne der gesamten Mischung. Dieses Gemisch eignet sich sehr gut als Boden insbesondere zur Rekultivierung von Wüsten.

Ein weiterer Gegenstand der vorliegenden Erfindung ist ein Gemisch bestehen aus Gülle und einem Superabsorber.

Vorzugsweise beträgt das Verhältnis Gülle zu Superabsorber 15 - 130 : 1, vorzugsweise 20 - 80 : 1, besonders bevorzugt 25 - 60 : 1, jeweils bezogen auf die Masse.

Vorzugsweise wird nur der flüssige Anteil der Gülle mit dem Superabsorber vermischt.

Vorzugsweise beträgt das Verhältnis von flüssigem Gülleanteil zu Superabsorber 15 - 130 : 1, vorzugsweise 20 - 80 : 1, besonders bevorzugt 25 - 60 : 1, jeweils bezogen auf die Masse.

Bezüglich der Gülle und dem Superabsorber wird auf das oben gesagte verwiesen.

Weiterhin bevorzugt ist das Gemisch zumindest gelartig, vorzugsweise rieselfähig.

In einer weiteren bevorzugten Ausführungsform weist das Gemisch aus flüssigem Anteil der Gülle und Superabsorber zusätzlich den festen, beispielsweise aus der Separation resultierenden Anteil der Gülle und/oder Hafenschlick auf, wobei der Hafenschlick behandelt sein kann. Die Bedeutung einer Behandlung im Sinne der Erfindung ist bereits oben beschrieben.

Vorzugsweise beträgt der Anteil an mit flüssiger Gülle, vorzugsweise dem flüssigen Anteil von Gülle, beladenem Superabsorber 0,3 - 2 kg, vorzugsweise 0,5 - 1,5 kg, besonders bevorzugt 0,75 - 1,25 kg pro Tonne Gesamtgemisch. Diese Gemisch ist insbesondere als Bodenmaterial einsetzbar.

## Patentansprüche

1. Verfahren zum Lagern und/oder Entsorgen des flüssigen Anteils von Gülle, **dadurch gekennzeichnet**, das er mit einem Superabsorber vermischt wird.

2. Verfahren nach Anspruch 1, **dadurch gekennzeichnet, dass** Verhältnis von flüssigem Anteil zu Superabsorber 15 - 130 : 1, vorzugsweise 30 - 80 : 1, besonders bevorzugt 40 - 60 : 1, jeweils bezogen auf die Masse beträgt.

3. Verfahren nach einem der voranstehenden Ansprüche, **dadurch gekennzeichnet, dass** das Gemisch aus Gülle und Superabsorber einem Verdunstungsverfahren unterzogen wird.

4. Verfahren nach Anspruch 3, **dadurch gekennzeichnet, dass** die Gewichtsreduktion bei der Verdunstung 30 - 80, vorzugsweise 40 -75, besonders bevorzugt 60 - 70 Gew.-% beträgt.

5. Verfahren nach einem der voranstehenden Ansprüche, **dadurch gekennzeichnet, dass** der flüssige Anteil der Gülle vor der Mischung mit dem Superabsorber vorbehandelt wird.

6. Verfahren nach einem der voranstehenden Ansprüche, **dadurch gekennzeichnet, dass** Gemisch mit dem Feststoffanteil der Gülle und Hafenschlick versetzt wird.

7. Verfahren nach Anspruch 6, **dadurch gekennzeichnet, dass** der Hafenschlick entgiftet ist.

8. Verfahren zum Lagern und/oder Entsorgen von Gülle, **dadurch gekennzeichnet**, das sie mit einem Superabsorber vermischt wird.

9. Verfahren nach Anspruch 8, **dadurch gekennzeichnet, dass** Verhältnis von Gülle zu Superabsorber 15 - 130 : 1, vorzugsweise 30 - 80 : 1, besonders bevorzugt 40 - 60 : 1, jeweils bezogen auf die Masse beträgt.

10. Verfahren nach einem der Ansprüche 8 oder 9, **dadurch gekennzeichnet, dass** das Gemisch aus Gülle und Superabsorber einem Verdunstungsverfahren unterzogen wird.

11. Verfahren nach Anspruch 10, **dadurch gekennzeichnet, dass** die Gewichtsreduktion bei der Verdunstung 30 - 80, vorzugsweise 40 -75, besonders bevorzugt 60 - 70 Gew.-% beträgt.

12. Verfahren nach einem der voranstehenden Ansprüche, **dadurch gekennzeichnet, dass** die Gülle vor der Mischung mit dem Superabsorber vorbehandelt wird.

13. Verfahren nach einem der Ansprüche 8-12, **dadurch gekennzeichnet, dass** Gemisch mit Hafenschlick versetzt wird.

14. Verfahren nach Anspruch 13, **dadurch gekennzeichnet, dass** der Hafenschlick entgiftet ist.

15. Gemisch bestehen aus dem flüssigen Anteil von Gülle und einem Superabsorber.

16. Gemisch bestehen aus Gülle und einem Superabsorber.

17. Gemisch nach Anspruch 15 oder 16, **dadurch gekennzeichnet, dass** Verhältnis von Gülle zu Superabsorber 15 - 130 : 1, vorzugsweise 20 - 80 : 1, besonders bevorzugt 25 - 60 : 1, jeweils bezogen auf die Masse beträgt.

18. Gemisch nach einem der voranstehenden Ansprüche, **dadurch gekennzeichnet, dass** es zumindest gelartig, vorzugsweise rieselfähig ist.

19. Gemisch nach einem der voranstehenden Ansprüche, **dadurch gekennzeichnet, dass** es zusätzlich den festen Anteil der Gülle und/oder Hafenschlick aufweist.

20. Gemisch nach Anspruch 19, **dadurch gekennzeichnet, dass** der Anteil an mit flüssiger Gülle beladenem Superabsorber 0,3 - 2 kg, vorzugsweise 0,5 - 1,5 kg, besonders bevorzugt 0,75 - 1,25 kg pro Tonne Boden beträgt.

21. Gemisch nach einem der voranstehenden Ansprüche, **dadurch gekennzeichnet, dass** es als Bodenmaterial einsetzbar ist.
